# EUROPÄISCHE PATENTSCHRIFT

(11) **EP 0 292 860 B1**
(45) Veröffentlichungstag und Bekanntmachung des Hinweises auf die Patenterteilung: **26.01.1994**
(21) Anmeldenummer: 88107988.3
(22) Anmeldetag: 19.05.1988
(51) Int. Cl.: G05D 23/13

(54) **Elektronisch temperaturgeregelte Mischarmatur**
Electronic temperature regulating mixing valve
Mélangeur thermostatique électronique

(30) Priorität: 28.05.1987 DE 3718039
(43) Veröffentlichungstag der Anmeldung: 30.11.1988
(73) Patentinhaber: IDEAL-STANDARD GMBH, D-53008 Bonn (DE)
(72) Erfinder: Bergmann, Konrad, Dr.-Ing., D-5560 Wittlich (DE)
(74) Vertreter: Gesthuysen, Hans Dieter, Dipl.-Ing.

(56) Entgegenhaltungen:
- EP-A- 0 184 824
- DE-A- 2 614 579
- GB-A- 2 056 627

## Beschreibung

Die Erfindung betrifft eine elektronisch temperaturgeregelte Mischarmatur, mit mindestens einem Ventil zur Absperrung, Mischung und/oder Verteilung, mit mindestens einem Temperatursensor für das Mischwasser, vorzugsweise mit mindestens einem weiteren Temperatursensor, mit mindestens einem Ventilstellmotor und mit einer elektronischen Meß-, Steuer- und Regelschaltung (vgl. die GB - A - 2 056 627).

Bei der bekannten Mischarmatur, von der die Erfindung ausgeht, sind die funktionsnotwendigen Bauteile - Ventil bzw. Ventile, Temperatursensor bzw. Temperatursensoren, Ventilstellmotor bzw. Ventilstellmotoren und Meß-, Steuer- und Regelschaltung mechanisch und elektrisch - zu einer Baueinheit zusammengefaßt. Das ist herstellungstechnisch relativ aufwendig und weder montage- noch reparaturfreundlich.

Der Erfindung liegt die Aufgabe zugrunde, eine elektronisch temperaturgeregelte Mischarmatur anzugeben, die herstellungstechnisch weniger aufwendig sowie in besonderem Maße montage- und reparaturfreundlich ist.

Diese Aufgabe wird erfindungsgemäß im wesentlichen durch eine elektronisch temperaturgeregelte Mischarmatur mit den Merkmalen des Patentanspruchs 1 gelöst. Die erfindungsgemäße elektronisch temperaturgeregelte Mischarmatur ist dabei mit den Merkmalen des Kennzeichnungsteils des Patentanspruchs 1 dadurch gekennzeichnet, daß das Ventil ein dem Ventilstellmotor zugeordnetes Kupplungselement aufweist bzw. die Ventile den Ventilstellmotoren zugeordnete Kupplungselemente aufweisen und Bestandteil eines Ventil-Moduls ist bzw. sind, daß der Ventilstellmotor ein dem Ventil zugeordnetes Kupplungselement aufweist bzw. die Ventilstellmotoren den Ventilen zugeordnete Kupplungselemente aufweisen und Bestandteil eines Motor-Moduls ist bzw. sind, daß die elektronische Meß-, Steuer- und Regelschaltung Bestandteil eines Meß-, Steuer- und Regel-Moduls ist, daß das Ventil-Modul, das Motor-Modul und das Meß-, Steuer- und Regel-Modul einander zugeordnete elektrische Kontakte aufweisen und daß das Ventil-Modul, das Motor-Modul und das Meß-, Steuer- und Regel-Modul durch Zusammenstecken mechanisch und - über die elektrischen Kontakte des Ventil-Moduls, des Motor-Moduls und des Meß-, Steuer- und Regel-Moduls - elektrisch miteinander verbindbar sind.

Die erfindungsgemäße elektronisch temperaturgeregelte Mischarmatur ist aufgrund ihres besonderen Aufbaus unter Verwendung zweier strukturell unterschiedlicher elektro-mechanischer Module und eines zusätzlichen elektronischen Moduls sehr montage- und reparaturfreundlich und darüber hinaus herstellungstechnisch weniger aufwendig.

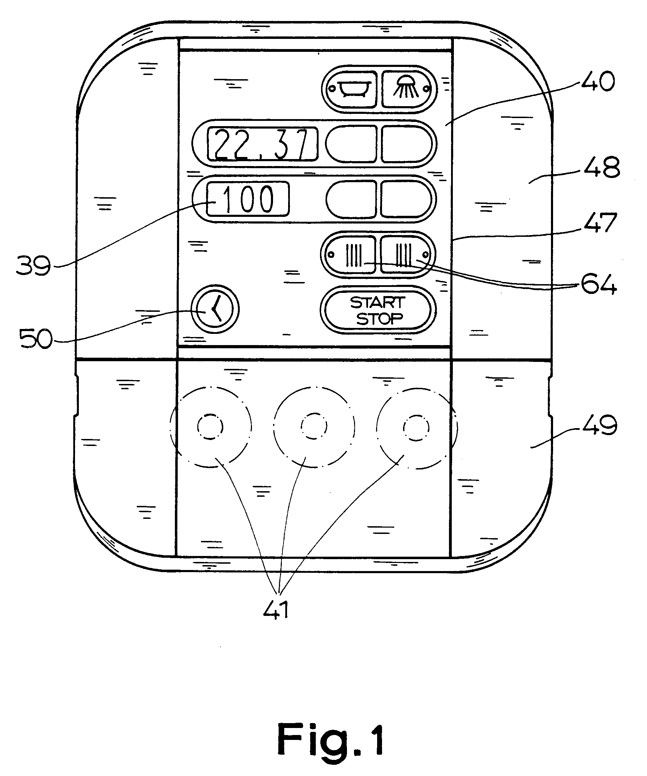

Weitere Merkmale und Vorteile der Erfindung ergeben sich aus den Unteransprüchen und der nachfolgenden Beschreibung von Ausführungsbeispielen. Es zeigt
- Fig. 1: eine Draufsicht auf eine erfindungsgemäße elektronisch temperaturgeregelte Mischarmatur,

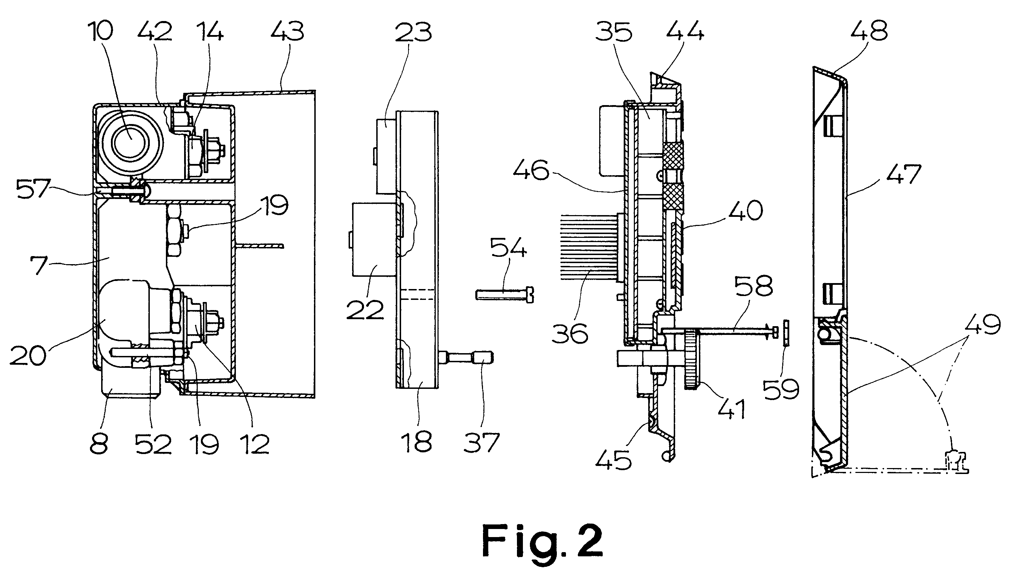

- Fig. 2: eine Querschnittsansicht der erfindungsgemäßen Mischarmatur in Explosionsdarstellung,

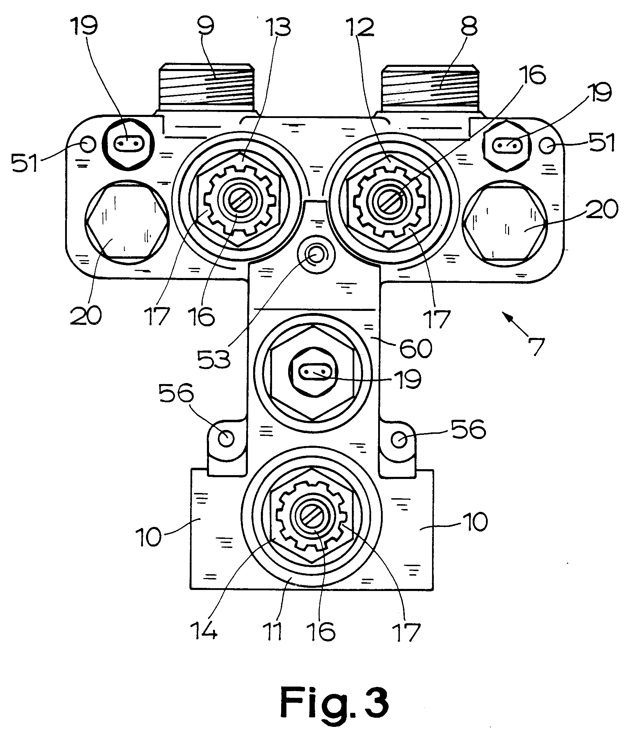

- Fig. 3: eine Draufsicht auf ein Ventil-Modul,

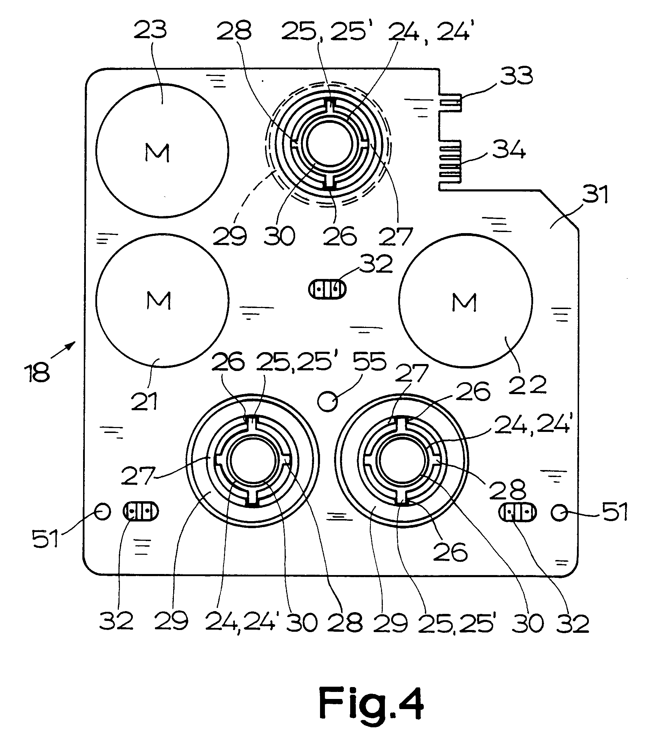

- Fig. 4: eine Draufsicht auf ein Motor-Modul,
- Fig. 5: eine Querschnittsansicht von Kupplungselementen eines Ventil für Kaltwasser oder Ventils für Warmwasser und eines zugehörigen Ventilstellmotors und
- Fig. 6: eine der Fig. 5 entsprechende Ansicht einer anderen Ausführungsform von Kupplungselementen.

Die erfindungsgemäße elektronisch temperaturgeregelte Mischarmatur weist ein Ventil-Modul 7 auf, das mit einem Kaltwasser-Zulauf 9, einem Warmwasser-Zulauf 8 und mit Mischwasser-Abgängen 10 z. B. für Wannen- oder Brausebetrieb versehen ist. In dem Ventil-Modul 7 befinden sich Öffnungen zur Aufnahme eines Ventils 12 für Warmwasser, eines Ventils 13 für Kaltwasser und eines Ventils 14 zum Umschalten. Die Ventile 12, 13, 14 weisen Kupplungselemente 15 in Form von Kupplungsflanschen auf, welche auf Ventilspindeln 16 aufsteckbar sind und eine als Kupplungselement 17 ausgebildete Flanschverzahnung aufweisen, in die wiederum Kupplungselemente eines Motor-Moduls 18 eingreifen. Das Ventil-Modul 7 weist ferner Temperatursensoren 19 für das Kalt-, Warm- und das Mischwasser und Schalldämpfer 20 auf der Kalt- und Warmwasserseite auf.

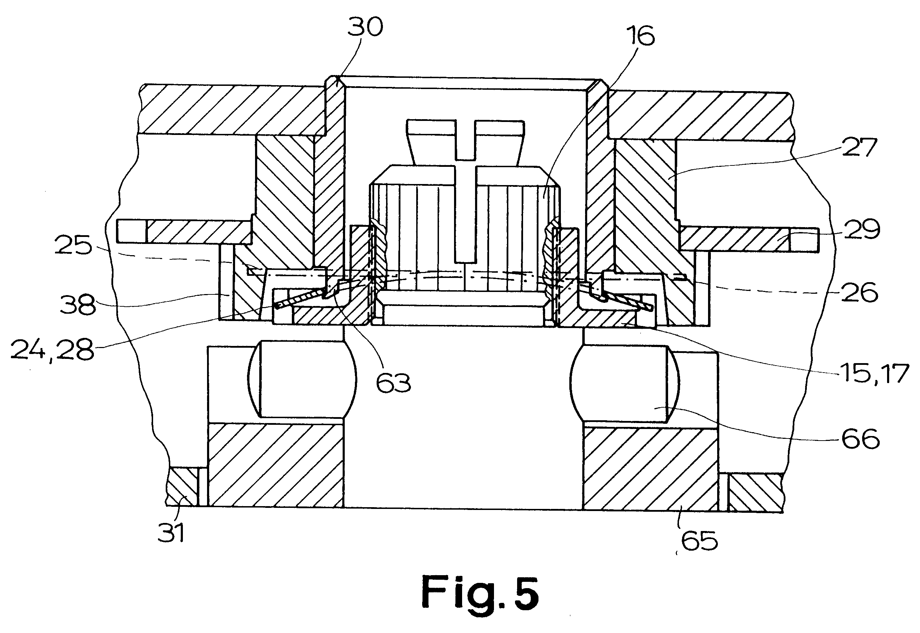

Das Motor-Modul 18 weist einen Ventilstellmotor 21 für das Kaltwasser, einen Ventilstellmotor 22 für das Warmwasser und einen Ventilstellmotor 23 für das Mischwasser auf. Den Ventilstellmotoren 21, 22, 23 sind jeweils nicht gezeigte Getriebe zugeordnet, die mit Kupplungselementen des Motor-Moduls 18 zusammenwirken. Gemäß einem ersten Ausführungsbeispiel (Fig. 5) weisen diese Kupplungselemente als federnde Kupplungskreuze ausgebildete Kupplungselemente 24 auf, deren als längere Finger ausgebildete Kupplungselement 25 in als untere stirnseitige Ausnehmungen ausgebildete Kupplungselemente 26 von als Kupplungsräder ausgebildete Kupplungselemente 27 eingreifen, während kürzere als federnde und vorstehende Finger ausgebildete Kupplungselemente 28 in das als Flanschverzahnung ausgebildete Kupplungselement 17 des als Kupplungsflansch ausgebildeten Kupplungselementes 15 der Ventile 12, 13, 14 eingreifen. Die Kupplungselemente des Motor-Moduls 18 umfassen ferner als Zahnräder ausgebildete Kupplungselemente 29, die mit den als Kupplungsrädern ausgebildeten Kupplungselementen 27 fest verbunden und mit diesen in als feststehenden Lagerbuchsen ausgebildeten Kupplungselementen 30 drehbar sind, während sie andererseits mit den nicht dargestellten Getrieben der Ventilstellmotoren 21, 22, 23 in Eingriff stehen. Für den Fall eines Stromausfalls ist jedoch eine Entkupplung von den Getrieben für den Ventilstellmotor 21 für Kaltwasser und den Ventilstellmotor 22 für Warmwasser möglich. Eine Entkupplung von dem Getriebe des kleineren Ventilstellmotors 23 für die Steuerung des Mischwassers und damit des Ventils 14 zum Umschalten ist ebenfalls denkbar, bei den gezeigten Ausführungsbeispielen aber nicht vorgesehen. Hierzu wird später noch weiteres ausgeführt.

Das Motor-Modul 18 ist auf seiner dem Ventil-Modul 7 zugewandten Seite mit einer als Leiterplatte 31 dienenden Wandung versehen, die neben federnden elektrischen Kontakten 32 für die Temperatursensoren 19 und die Ventilstellmotoren 21, 22, 23 mit als Steckkontakte ausgebildeten elektrischen Kontakten 33 für den Anschluß an die Versorgungsspannung eines nicht dargestellten Transformators mit einem als Steckleiste ausgebildeten elektrischen Kontakt 34 für die Weiterleitung der Versorgungsspannung an die Elektronik eines Meß-, Steuer- und Regel-Moduls 35 versehen ist, das einen als Vierpol-Flachkabelstecker ausgebildeten elektrischen Kontakt 36 für den Anschluß an den als Steckleiste ausgebildeten elektrischen Kontakt 34 aufweist.

Das Motor-Modul 18 ist mit manuell betätigbaren Wellen 37 ausgerüstet, von denen zwei Wellen 37 mit den als Zahnrad ausgebildeten Kupplungselementen 29 der als Kupplungsrad ausgebildeten Kupplungselemente 27 für das Ventil 12 für Warmwasser und das Ventil 13 für Kaltwasser unter Entkupplung von den Getrieben der Ventilstellmotoren 21, 22 direkt verbindbar sind. Die dritte Welle 37 steht über einen nicht gezeigten Riementrieb ständig mit einer Außenverzahnung 38 des als Kupplungsrad ausgebildetem Kupplungselementes 27 in Verbindung, welches dem Ventilstellmotor 23 für das Ventil 14 zum Umschalten zugeordnet ist.

Wie ersichtlich, ist das Meß-, Steuer- und Regel-Modul 35 mit als LED-Anzeige 39 ausgebildeten Anzeigen und mit einer als Folientastatur 40 ausgebildeten Tastatur für die verschiedenen Funktionen ausgerüstet, wie beispielsweise Ein- und Ausschaltung, Brause- oder Wannenbetrieb, Mengen- und Temperatur-Sollwert-Einstellung, Kalt- oder Warmwasserbetrieb, Uhrzeit-Abruf und für ggf. weitere Funktionen.

Das Meß-, Steuer- und Regel-Modul 35 ist mit Handrädern 41 versehen, von denen die beiden äußeren bei Stromausfall über zwei der Wellen 37 mit den als Zahnräder ausgebildeten Kupplungselementen 29 in Eingriff bringbar sind, welche den Ventilstellmotoren 22, 21 für das Ventil 12, 13 für das Warm- und Kaltwasser zugeordnet sind. Die beiden äußeren Handräder 41 werden bei Stromausfall etwas in das Meß-, Steuer- und Regel-Modul 35 eingedrückt, wodurch eine Entkupplung von den entsprechenden Getrieben erfolgt. Auf diese Weise bleibt die erfindungsgemäße Mischarmatur durch manuelle Betätigung ohne großen Kraftaufwand funktionsfähig. Hinsichtlich des Ventils 14 zum Umschalten bedarf es einer Entkupplung mit dem kleineren Ventilstellmotor 23 nicht. Eine manuelle Betätigung ist bei Bedarf über das mittlere Handrad 41 und einen Riementrieb leicht möglich.

Das Ventil-Modul 7, das Motor-Modul 18 und das Meß-, Steuer- und Regel-Modul 35 sind in der Öffnung einer nicht dargestellten Wand vorgesehen. Das Ventil-Modul 7 ist von einem Unterputz-Kasten 42 umgeben und vor der Fertiginstallation mittels eines Putz-Kastens 43 abgedeckt, der für die Fertiginstallation gegen das Motor-Modul 18 ausgetauscht wird. Die Öffnung in der Wand wird mittels des Meß-, Steuer- und Regel-Moduls 35 nach außen wasserdicht verschlossen. Hierfür ist das Meß-, Steuer- und Regel-Modul 35 mit einem Rand 44 versehen, mit dem es unter Zwischenschaltung einer in einer umlaufenden Ausnehmung 45 vorgesehenen Dichtung an der Wand liegt. Dieser Rand ist ferner mit der Folientastatur 40 wasserdicht verbunden (verschweißt), und er ist Bestandteil eines die Elektronik des Meß-, Steuer- und Regel-Moduls 35 dicht verschließenden Gehäuses 46, dessen die Folientastatur 40 bildender Wandungsteil eine Öffnung 47 einer Abdeckung 48 durchdringt und von dieser rosettenartig umgeben ist. Die Abdeckung 48 weist eine untere Klappe 49 für den Zugang zu den Handrädern 41 auf. Bei geöffneter Klappe 49 ist ferner nach vorherigem Drücken der Uhr-Symbol-Taste 50 die Zeit einstellbar.

Das Ventil-Modul 7 und das Motor-Modul 18 sind mit Öffnungen 51 zur Aufnahme von Zentrierstiften 52 für eine Paßzentrierung zwischen Ventil-Modul 7 und Motor-Modul 18 versehen. Das Ventil-Modul 7 besitzt ferner eine Gewinde-Öffnung 53 für eine Schraubverbindung mit dem Motor-Modul 18 (siehe Schraube 54 und Öffnung 55 im Motor-Modul 18). Das Ventil-Modul 7 ist ferner mit Öffnungen 56 für eine Schraubverbindung 57 mit dem Unterputz-Kasten 42 und dem Putz-Kasten 43 versehen.

Das Meß-, Steuer- und Regel-Modul 35 ist über zwei Schrauben 58 mit dem Motor-Modul 18 verbunden. Die Schrauben 58 sind nach außen durch Abdeckkappen 59 spritzwasserdicht abgedichtet.

Die Ventile 12, 13, 14 sind in einem T-förmigen Armaturenkörper 60 gehalten, und die Ventilstellmotoren 21, 22, 23 sind relativ zu den Ventilen 12, 13, 14 so versetzt, daß sie nach der baulichen Vereinigung des Ventil-Moduls 7, des Motor-Moduls 18 und des Meß-, Steuer- und Regel-Moduls 35 etwa in der Ebene der Ventile 12, 13, 14 positioniert sind.

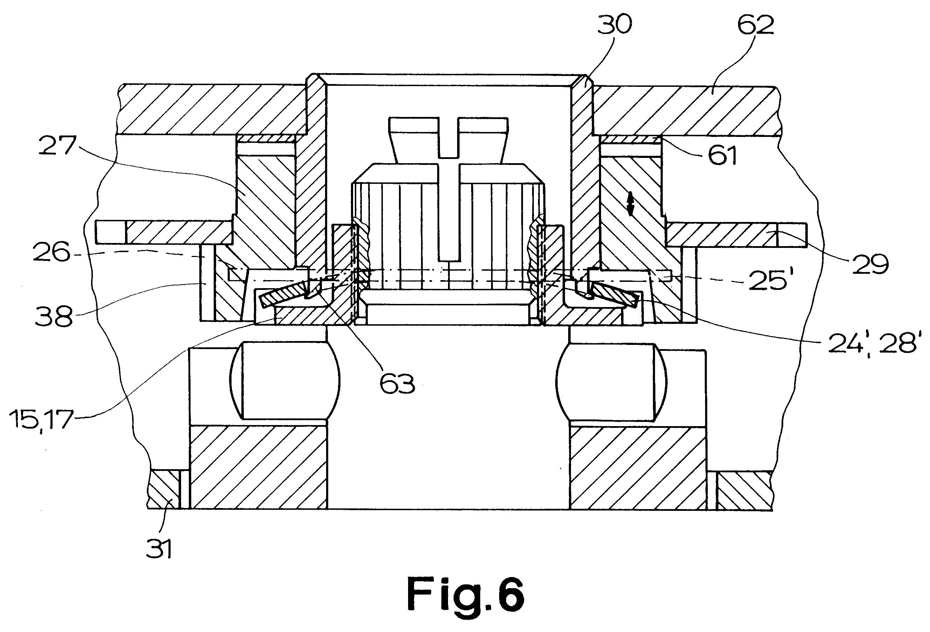

Gemäß dem zweiten Ausführungsbeispiel (Fig. 6) können als Kupplungskreuze ausgebildete Kupplungselemente 24' auch starr ausgebildet sein mit als längere und kürzere Finger ausgebildeten Kupplungselementen 25', 28'. Der Eingriff der als Kupplungskreuze ausgebildeten Kupplungselemente 24' wird bei diesem Ausführungsbeispiel unterstützt von Wellfedern 61, die zwischen den als Kupplungsräder ausgebildeten Kupplungselementen 27 und der einen Wand 62 des Motor-Moduls 18 vorgesehen sind. Die als Kupplungskreuze ausgebildeten Kupplungselemente 24, 24' sind unverlierbar hinter Nasen 63 der als Lagerbuchsen ausgebildeten Kupplungselemente 30 gehalten.

Unabhängig von der Stellung der Ventile 12, 13, 14 und damit des als Flanschverzahnung ausgebildeten Kupplungselementes 17 der als Kupplungsflansche ausgebildeten Kupplungselemente 15 rasten die als kürzere Finger ausgebildeten Kupplungselemente 28, 28' der als Kupplungskreuze ausgebildeten Kupplungselemente 24, 24' nach dem Zusammenbau des Ventil-Moduls 7 und des Meß-, Steuer- und Regel-Moduls 35 automatisch in das als Flanschverzahnung ausgebildete Kupplungselement 15 ein. Eine Zerstörung oder Klemmen durch die Schraubverbindung des Ventil-Moduls 7 und des Motor-Moduls 18 wegen Aufsetzens der als Kupplungskreuze ausgebildeten Kupplungselemente 24, 24' außerhalb des Eingriffs ist ausgeschlossen.

Wie bereits erwähnt, sind die dargestellten und beschriebenen Ausführungsformen nur Beispiele zur Verwirklichung der Erfindung. So können als Antrieb außer drehenden Antrieben, wie z. B. Gleichstrommotoren auch Linear-Motoren verwendet werden, deren physikalisches Prinzip elektromagnetisch, piezoelektrisch oder thermisch sein kann. Ferner sind weitere Funktionen denkbar, um z. B. auch ein Ablaufventil automatisch zu betätigen. Des weiteren können Tasten 64 vorgesehen sein. Hinsichtlich dieser Tasten 64 - für nur Kalt- oder nur Warmbetrieb (rechts bzw. links) - ist zur Vermeidung eines versehentlichen Warmbetriebs vorgesehen, daß für einen gewollten Warmbetrieb nach dem Drücken der linken Taste 64 noch die Taste "START STOP" zu drücken ist. Hinsichtlich der Taste "VOL.IN %" ist vorgesehen, daß für Brause-Betrieb eine Einstellung ab 20 % und bei Wannenbetrieb jede Volumeneinstellung möglich ist. Die Ventile 12, 13, 14 sind von herkömmlicher Konstruktion mit einem Gehäuse 65 in Kartuchenform und Anschlägen 66. Schließlich sind selbstverständlich auch Aufputz-Ausführungen denkbar und solche Ausführungen, die anderen Zwecken dienen als Wannen- und Brausebetrieb.

## Patentansprüche

1. Elektronisch temperaturgeregelte Mischarmatur, mit mindestens einem Ventil (12, 13, 14) zur Absperrung, Mischung und/oder Verteilung, mit mindestens einem Temperatursensor (19) für das Mischwasser, vorzugsweise mit mindestens einem weiteren Temperatursensor (19), mit mindestens einem Ventilstellmotor (21, 22, 23) und mit einer elektronischen Meß-, Steuer- und Regelschaltung, **dadurch gekennzeichnet**, daß das Ventil ein dem Ventilstellmotor zugeordnetes Kupplungselement aufweist bzw. die Ventile (12, 13, 14) den Ventilstellmotoren (21, 22, 23) zugeordnete Kupplungselemente (15, 17) aufweisen und Bestandteil eines Ventil-Moduls (7) ist bzw. sind, daß der Ventilstellmotor ein dem Ventil zugeordnetes Kupplungselement aufweist bzw. die Ventilstellmotoren (21, 22, 23) den Ventilen (12, 13, 14) zugeordnete Kupplungselemente (24, 24', 27, 29, 30) aufweisen und Bestandteil eines Motor-Moduls (18) ist bzw. sind, daß die elektronische Meß-, Steuer- und Regelschaltung Bestandteil eines Meß-, Steuer- und Regelmoduls (35) ist, daß das Ventil-Modul (7), das Motor-Modul (18) und das Meß-, Steuer- und Regelmodul (35) einander zugeordnete elektrische Kontakte (32, 33, 34, 36) aufweisen und daß das Ventil-Modul (7), das Motor-Modul (18) und das Meß-, Steuer- und Regel-Modul (35) durch Zusammenstecken mechanisch und - über die elektrischen Kontakte (32, 33, 34, 36) des Ventil-Moduls (7), des Motor-Moduls (18) und des Meß-, Steuer- und Regel-Moduls (35) - elektrisch miteinander verbindbar sind.

2. Elektronisch temperaturgeregelte Mischarmatur nach Anspruch 1, dadurch gekennzeichnet, daß das Ventil-Modul (7) versehen ist mit mindestens einem Kaltwasser-Zulauf (9), einem Warmwasser-Zulauf (8) und einem Mischwasser-Abgang (10) und mit Öffnungen (11) zur Aufnahme zumindest des Ventils (12) für Warmwasser und des Ventils (13) für Kaltwasser, daß das Motor-Modul (18) versehen ist mit dem Ventilstellmotor (21) für das Kaltwasser und dem Ventilstellmotor (22) für das Warmwasser, mit jeweils einem Getriebe für die Ventilstellmotoren (21, 22) mit den Kupplungselementen (24, 24', 27, 29, 30) für eine Verbindung mit den Getrieben und/oder manuellen Betätigungseinrichtungen einerseits und den Kupplungselementen (15, 17) an den Ventilen (12, 13, 14) andererseits, und mit den elektrischen Kontakte (32) für die Temperatur-Sensoren (19) und die Ventilstellmotoren (21, 22, 23) und daß das Meß-, Steuer- und Regel-Modul (35) neben der Elektronik Teile der manuellen Betätigungseinrichtungen aufweist.

3. Elektronisch temperaturgeregelte Mischarmatur nach Anspruch 1 oder 2, dadurch gekennzeichnet, daß das Motor-Modul (18) auf seiner dem Ventil-Modul (7) zugewandten Seite mit einer als Leiterplatte (31) dienenden Wandung versehen ist, die neben den elektrischen Kontakten (32) für die Temperatur-Sensoren (19) und die Ventilstellmotoren (21, 22, 23) mit als Steckkontakten ausgebildeten elektrischen Kontakten (33) für den Anschluß an die Versorgungsspannung eines Transformators und mit einem als Steckleiste ausgebildetem elektrischen Kontakt (34) für die Weiterleitung der Versorgungsspannung an die Elektronik des Meß-, Steuer- und Regel-Moduls (35) versehen ist.

4. Elektronisch temperaturgeregelte Mischarmatur nach einem der Ansprüche 1 bis 3, dadurch gekennzeichnet, daß das Meß-, Steuer- und Regel-Modul (35) für die Weiterleitung der Versorgungsspannung an die Elektronik mit einem als Stecker ausgebildeten elektrischen Kontakt (36) für den Anschluß an die den als Steckleiste ausgebildeten elektrischen Kontakt (34) des Motor-Moduls (18) versehen ist.

5. Elektronisch temperaturgeregelte Mischarmatur nach einem der Ansprüche 2 bis 4, dadurch gekennzeichnet, daß das Ventil-Modul 7 mit einem weiteren Mischwasser-Abgang (10) und einem Ventil (14) zum Umschalten mit einem Kupplungselement (15, 17) für den wahlweisen Betrieb der Mischwasser-Abgänge (10) versehen ist, und das Motor-Modul (18) einen weiteren Ventilstellmotor (23) und ein weiteres Getriebe mit Kupplungselementen (24, 24', 27, 29, 30) für die Verbindung mit den Kupplungselementen (15, 17) des Ventils (14) zum Umschalten aufweist.

6. Elektronisch temperaturgeregelte Mischarmatur nach Anspruch 2 und gegebenenfalls einem der vorhergehenden Ansprüche 3 bis 5, dadurch gekennzeichnet, daß die Kupplungselemente (15, 17) der Ventile (12, 13, 14) als Kupplungsflansche ausgebildet, auf Ventilspindeln (16) aufsteckbar sind und eine Flanschverzahnug aufweisen, in welche die Kupplungselemente (24, 24') des Motor-Moduls (18) eingreifen.

7. Elektronisch temperaturgeregelte Mischarmatur nach Anspruch 5 und gegebenenfalls Anspruch 6, dadurch gekennzeichnet, daß die Kupplungselemente (24, 27, 29, 30) des Motor-Moduls (18) teilweise federnde Kupplungskreuze aufweisen, deren längere Finger in untere stirnseitige Ausnehmungen von Kupplungsrädern eingreifen, während die kürzeren, federnden und vorstehenden Finger in die als Flanschverzahnung ausgebildeten Kupplungselemente (15, 17) des Ventil-Moduls (7) eingreifen.

8. Elektronisch temperaturgeregelte Mischarmatur nach Anspruch 7, dadurch gekennzeichnet, daß die Kupplungsräder zwecks Verbindung mit den Ventilstellmotoren (21, 22, 23) für das Kalt-, das Warm- sowie das Mischwasser Zahnräder tragen, die mit den Kupplungsrädern fest verbunden und mit diesen in feststehenden Lagerbuchsen drehbar sind, während sie andererseits mit den Getrieben für die Ventilstellmotoren (12, 13, 14) in Eingriff stehen.

9. Elektronisch temperaturgeregelte Mischarmatur nach Anspruch 8, dadurch gekennzeichnet, daß das Motor-Modul (18) mit manuell betätigbaren Wellen (37) ausgerüstet ist, von denen mindestens zwei Wellen (37) mit den Zahnrädern der Kupplungsräder für das Ventil (13) für das Kaltwasser und das Ventil (12) für das Warmwasser unter Entkupplung von den Getrieben der Ventilstellmotoren (22, 21) direkt verbindbar sind.

10. Elektronisch temperaturgeregelte Mischarmatur nach Anspruch 8, dadurch gekennzeichnet, daß das Kupplungsrad (27) für die Verbindung mit dem Ventilstellmotor (23) des Ventils (14) für die Umschaltung eine Außenverzahnung (38) für den Eingriff eines Zahnriehmens aufweist, der mit einer der manuell betätigten Wellen (37) in Eingriff steht.

11. Elektronisch temperaturgeregelte Mischarmatur nach einem der vorhergehenden Ansprüche, dadurch gekennzeichnet, daß das Meß-, Steuer- und Regel-Modul (35) mit Anzeigen (39) und einer Tastatur für verschiedene Funktionen, wie Ein- und Ausschaltung, Brause- oder Wannenbetrieb, Mengen- und Temperatur-Sollwert-Einstellung, nur Kalt- oder Warmbetrieb, Uhrzeit-Abruf und für ggf. weitere Funktionen versehen ist.

12. Elektronisch temperaturgeregelte Mischarmatur nach Anspruch 11, dadurch gekennzeichnet, daß die Tastatur als Folientastatur (40) ausgebildet ist.

13. Elektronisch temperaturgeregelte Mischarmatur nach einem der vorhergehenden Ansprüche, dadurch gekennzeichnet, daß das Meß-, Steuer- und Regel-Modul (35) mit Handrädern (41) versehen ist, die mit den Wellen (37) in Eingriff stehen oder bei Stromausfall mit diesen in Eingriff bringbar sind, vorzugsweise durch Drücken.

14. Elektronisch temperaturgeregelte Mischarmatur nach einem der vorhergehenden Ansprüche, dadurch gekennzeichnet, daß das Ventil-Modul (7), das Motor-Modul (18) und das Meß-, Steuer- und Regel-Modul (35) in einer Öffnung einer Wand vorgesehen sind, daß das Ventil-Modul (7) von einem Unterputz-Kasten (42) umgeben und vor der Fertiginstallation mittels eines Putz-Kastens (43) abgedeckt ist, der für die Fertiginstallation gegen das Motor-Modul (18) austauschbar ist.

15. Elektronisch temperaturgeregelte Mischarmatur nach einem der vorhergehenden Ansprüche, dadurch gekennzeichnet, daß das mit dem Motor-Modul (18) verbundene Meß-, Steuer- und Regel-Modul (35) die Öffnung an der Wand nach außen wasserdicht verschließt und hierfür mit einem Rand (44) unter Zwischenschaltung einer in einer umlaufenden Ausnehmung (45) vorgesehenen Dichtung an der Wand anliegt, wobei der Rand (44) ferner mit der Folientastatur (40) wasserdicht verbunden und Bestandteil eines die Elektronik des Meß-, Steuer- und Regel-Moduls (35) dicht verschließenden Gehäuses (46) ist, dessen die Folientastatur (40) bildender Wandungsteil eine Öffnung (47) einer Abdeckung (48) durchdringt und von dieser rosettenartig umgeben ist mit einer unteren Klappe (49) für den Zugang zu den Handrädern (41).

16. Elektronisch temperaturgeregelte Mischarmatur nach einem der vorhergehenden Ansprüche, dadurch gekennzeichnet, daß das Ventil-Modul (7) und das Motor-Modul (18) mit Öffnungen (51) zur Aufnahme von Zentrierstiften (52) für eine Paßzentrierung zwischen Ventil-Modul (7) und Motor-Modul (18) und das Ventil-Modul (7) mit wenigstens einer Gewindeöffnung (53) für eine Schraubverbindung (54, 55) mit dem Motor-Modul (18) versehen ist.

17. Elektronisch temperaturgeregelte Mischarmatur nach Anspruch 16, dadurch gekennzeichnet, daß das Ventil-Modul (7) mit Öffnungen (56) für eine Schraubverbindung (57) mit dem Unterputz-Kasten (42) und dem Putz-Kasten (43) versehen ist.

18. Elektronisch temperaturgeregelte Mischarmatur nach einem der vorhergehenden Ansprüche, dadurch gekennzeichnet, daß das Meß-, Steuer- und Regel-Modul (35) über Schrauben (58) mit dem Motor-Modul (18) verbunden ist, die nach außen durch Abdeckkappen (59) abgedeckt sind.

19. Elektronisch temperaturgeregelte Mischarmatur nach einem der vorhergehenden Ansprüche, dadurch gekennzeichnet, daß die Ventile (12, 13, 14) in einem T-förmigen Armaturenkörper (60) gehalten sind und die Ventilstellmotoren (21, 22, 23) zu den Ventilen (12, 13, 14) seitlich so versetzt sind, daß sie nach der baulichen Vereinigung des Ventil-Moduls (7) und des Motor-Moduls (18) etwa in der Ebene der Ventile (12, 13, 14) positioniert sind.

20. Elektronisch temperaturgeregelte Mischarmatur nach einem der vorhergehenden Ansprüche, dadurch gekennzeichnet, daß die elektrische Kontakte (32) an der Leiterplatte (31) für die Temperatur-Sensoren (19) federnd ausgebildet sind.

21. Elektronisch temperaturgeregelte Mischarmatur nach Anspruch 5, dadurch gekennzeichnet, daß die Kupplungselemente (24', 27, 29, 30) des Motor-Moduls (18) starre Kupplungskreuze aufweisen, deren längere Finger in untere stirnseitige Ausnehmungen von Kupplungsrädern eingreifen, während die kürzeren Finger vorstehen und in die Flanschverzahnung der Kupplungselemente (15, 17) des Ventil-Moduls (7) eingreifen, unterstützt von Federn (61), die zwischen den Kupplungsrädern und der einen Wand (62) des Motor-Moduls (18) vorgesehen sind.

22. Elektronisch temperaturgeregelte Mischarmatur nach einem der Ansprüche 7 und 21, dadurch gekennzeichnet, daß die Kupplungskreuze unverlierbar hinter Nasen (63) der Lagerbuchsen gehalten sind.

## Claims

1. An electronic temperature-controlled mixer fitting, with at least one valve (12, 13, 14) for shut-off, mixing and/or distribution, with at least one temperature sensor (19) for the mixed water, preferably with at least one additional temperature sensor (19), with at least one valve servo motor (21, 22, 23) and with an electronic measuring, control and regulating circuit, characterised in that the valve has a coupling element associated with the valve servo motor, or the valves (12, 13, 14) have coupling elements (15, 17) associated with the valve servo motors (21, 22, 23), and is or are a component of a valve module (7), that the valve servo motor has a coupling element associated with the valve, or the valve servo motors (21, 22, 23) have coupling elements (24, 24', 27, 29, 30) associated with the valves (12, 13, 14), and is or are a component of a motor module (18), that the electronic measuring, control and regulating circuit is a component of a measuring, control and regulating module (35), that the valve module (7), the motor module (18) and the measuring, control and regulating module (35) have electrical contacts (32, 33, 34, 36) associated with each other, and that the valve module (7), the motor module (18) and the measuring, control and regulating module (35) can be mechanically connected to each other by plugging together and can be electrically connected to each other via the electrical contacts (32, 33, 34, 36) of the valve module (7), of the motor module (18) and of the measuring, control and regulating module (35).

2. An electronic temperature-controlled mixer fitting according to claim 1, characterised in that the valve module (7) is provided with at least one cold water inlet (9), one hot water inlet (8) and one mixed water outlet (10) and with openings (11) for receiving at least the valve (12) for hot water and the valve (13) for cold water, that the motor module (18) is provided with the valve servo motor (21) for the cold water and with the valve servo motor (22) for the hot water, with a transmission in each case for the valve servo motors (21, 22), with the coupling elements (24, 24', 27, 29, 30) for connection to the transmissions and/or manual operating devices on the one hand and to the coupling elements (15, 17) on the valves (12, 13, 14) on the other hand, and with the electrical contacts (32) for the temperature sensors (19) and the valve servo motors (21, 22, 23), and that the measuring, control and regulating module (35) includes the manual operating devices in addition to the electronic components.

3. An electronic temperature-controlled mixer fitting according to claims 1 or 2, characterised in that the motor module (18) is provided on its side facing the valve module (7) with a wall serving as a conductor board (31), which in addition to the electrical contacts (32) for the temperature sensors (19) and the valve servo motors (21, 22, 23) is provided with electrical contacts (33) constructed as plug-in connectors for connection to the supply voltage of a transformer and with an electrical contact (34) constructed as a plug-in strip for the transmission of the supply voltage to the electronics of the measuring, control and regulating module (35).

4. An electronic temperature-controlled mixer fitting according to any one of claims 1 to 3, characterised in that the measuring, control and regulating module (35) is provided with an electrical contact (36) constructed as a plug-in connector for connection to the electrical contact (34) of the motor module (18) constructed as a plug-in strip, for the transmission of the supply voltage to the electronics.

5. An electronic temperature-controlled mixer fitting according to any one of claims 2 to 4, characterised in that the valve module (7) is provided with an additional mixed water outlet (10) and a valve (14) for changing over, with a coupling element (15, 17), for the operation of the mixed water outlets (10) according to choice, and the motor module (18) has an additional valve servo motor (23) and an additional transmission with coupling elements (24, 24', 27, 29, 30) for connection to the coupling elements (15, 17) of the valve (14) for changing over.

6. An electronic temperature-controlled mixer fitting according to claim 2 and optionally any one of the preceding claims 3 to 5, characterised in that the coupling elements (15, 17) of the valves (12, 13, 14) are constructed as coupling flanges, can be slipped on to valve spindles (16) and have a toothed flange portion in which the coupling elements (24, 24') of the motor module (18) engage.

7. An electronic temperature-controlled mixer fitting according to claim 5 and optionally claim 6, characterised in that the coupling elements (24, 27, 29, 30) of the motor module (18) comprise partially resilient coupling crosses, the longer fingers of which engage in lower recesses on the faces of coupling wheels, whilst the shorter, resilient projecting fingers engage in the coupling elements (15, 17) of the valve module (7) which are constructed as toothed flange portions.

8. An electronic temperature-controlled mixer fitting according to claim 7, characterised in that the coupling wheels carry toothed wheels for the purpose of connection to the valve servo motors (21, 22, 23) for the cold, hot and mixed water, which toothed wheels are rigidly attached to the coupling wheels and can rotate with the latter in fixed bearing bushes whilst on the other hand engaging with the transmissions for the valve servo motors (12, 13, 14).

9. An electronic temperature-controlled mixer fitting according to claim 8, characterised in that the motor module (18) is equipped with manually operable spindles (37), at least three spindles (37) of which can be directly connected to the toothed wheels of the coupling wheels for the valve (13) for the cold water and the valve (12) for the hot water, with the transmissions of the valve servo motors (22, 21) being uncoupled.

10. An electronic temperature-controlled mixer fitting according to claim 8, characterised in that the coupling wheel (27) for connection to the valve servo motor (23) of the valve (14) for changing over has an outer toothed portion (38) for engagement with a toothed belt which is in engagement with one of the manually operated spindles (37).

11. An electronic temperature-controlled mixer fitting according to any one of the preceding claims, characterised in that the measuring, control and regulating module (35) is provided with indicators (39) and a keyboard. for various functions, such as switching on and off, shower or bath operation, quantity and temperature set value adjustment, cold or hot operation only, clock time request, and optionally for additional functions.

12. An electronic temperature-controlled mixer fitting according to claim 11, characterised in that the keyboard is constructed as a keypad (40).

13. An electronic temperature-controlled mixer fitting according to any one of the preceding claims, characterised in that the measuring, control and regulating module (35) is provided with hand-wheels (41) which are in engagement with the spindles (37) or which can be brought into engagement with the latter, preferably by pushing, in the event of a power failure.

14. An electronic temperature-controlled mixer fitting according to any one of the preceding claims, characterised in that the valve module (7), the motor module (18) and the measuring, control and regulating module (35) are disposed in a recess in a wall, that the valve module (7) is surrounded by a flush-mounted box (42) and is covered before the final installation by means of a surface-mounted box (43) which can be replaced by the motor module (18) for the final installation.

15. An electronic temperature-controlled mixer fitting according to any one of the preceding claims, characterised in that the measuring, control and regulating module (35) attached to the motor module (18) forms an external water-tight seal for the recess in the wall and for this purpose is seated with one edge (44) against the wall with the interposition of a seal provided in a surrounding recess (45), wherein the edge (44) is also attached forming a water-tight seal to the keypad (40) and is a component of a housing (46) forming a sealed enclosure for the electronics of the measuring, control and regulating module (35), the wall part of which housing forming the keypad (40) penetrates an opening (47) in a cover (48) and is surrounded by the latter in the manner of a rosette with a lower flap (49) for access to the hand-wheels (41).

16. An electronic temperature-controlled mixer fitting according to any one of the preceding claims, characterised in that the valve module (7) and the motor module (18) are provided with openings (51) for receiving centring pins (52) for adjusting the centring between the valve module (7) and the motor module (18), and the valve module (7) is provided with at least one threaded orifice (53) for a screwed connection (54, 55) to the motor module (18).

17. An electronic temperature-controlled mixer fitting according to claim 16, characterised in that the valve module (7) is provided with orifices (56) for a screwed connection (57) to the flush-mounted box (42) and the surface-mounted box (43).

18. An electronic temperature-controlled mixer fitting according to any one of the preceding claims, characterised in that the measuring, control and regulating module (35) is attached to the motor module (18) via screws (58) which are covered externally by caps (59).

19. An electronic temperature-controlled mixer fitting according to any one of the preceding claims, characterised in that the valves (12, 13, 14) are held in a T-shaped fitting body (60) and the valve servo motors (21, 22, 23) are offset laterally in relation to the valves (12, 13, 14) so that after structurally combining the valve module (7) and the motor module (18) they are positioned approximately in the plane of the valves (12, 13, 14).

20. An electronic temperature-controlled mixer fitting according to any one of the preceding claims, characterised in that the electrical contacts (32) for the temperature sensors (19) on the conductor board (31) are of resilient construction.

21. An electronic temperature-controlled mixer fitting according to claim 5, characterised in that the coupling elements (24', 27, 29, 30) of the motor module (18) comprise rigid coupling crosses, the longer fingers of which engage in lower, recesses on the faces of coupling wheels, whilst the shorter fingers project and engage in the toothed flange portion of the coupling elements (15, 17) of the valve module (7), supported by springs (61) which are provided between the coupling wheels and one wall (62) of the motor module (18).

22. An electronic temperature-controlled mixer fitting according to one of claims 7 and 21, characterised in that the coupling crosses are held behind lugs (63) on the bearing bushes so that they cannot be lost.

## Revendications

1. Mélangeur à thermorégulation électronique, comportant au moins une soupape (12,13,14) pour l'interruption, le mélange et/ou la distribution, au moins un capteur de température (19) pour l'eau de mélange, de préférence au moins un autre capteur de température (19), au moins un servomoteur (21,22,23) d'actionnement de la soupape et un circuit électronique de mesure, de commande et de régulation, caractérisé en ce que la soupape possède un élément d'accouplement associé au servomoteur d'actionnement de la soupape ou les soupapes (12,13,14) comportent des éléments d'accouplement (15,17) associés aux servomoteurs (21,22,23) d'actionnement des soupapes et fait ou font partie d'un module à soupapes (7), que le servomoteur d'actionnement d'une soupape possède un élément d'accouplement associé à la soupape ou que les servomoteurs (21,22,23) d'actionnement des soupapes possèdent des éléments d'accouplement (24,24',27,29,30) associés aux soupapes (12,13,14) et est ou font partie d'un module à moteurs (18), que le circuit électronique de mesure, de commande et de régulation fait partie d'un module de mesure, de commande et de régulation (35), que le module à soupapes (16), le module à moteurs (18) et le module de mesure, de commande et de régulation (35) comportent des contacts électriques (32,33,34,36) associés entre eux et que le module à soupapes (7), le module à moteurs (18) et le module de mesure, de commande et de régulation (35) peuvent être réunis entre eux mécaniquement par enfichage et électriquement - par l'intermédiaire des contacts électriques (32,33,34,36) du module à soupapes (7), du module à moteur (18) et du module de mesure, commande et régulation (35).

2. Mélangeur à thermorégulation électronique selon la revendication 1, caractérisé en ce que le module à soupapes (7) est équipé d'au moins une arrivée (9) pour l'eau froide, une arrivée (8) pour l'eau chaude et un départ (10) pour l'eau de mélange, et est équipé d'ouvertures (11) servant à loger au moins la soupape (12) pour l'eau chaude et la soupape (13) pour l'eau froide, que le module à moteurs (18) est équipé d'un servomoteur (21) d'actionnement de la soupape pour l'eau froide et du servomoteur (22) d'actionnement de la soupape pour l'eau chaude, et respectivement d'une transmission pour les servomoteurs (21,22) d'actionnement des soupapes, équipée des éléments d'accouplement (24,24',27,29,30) pour établir une liaison avec les transmissions et/ou les dispositifs d'actionnement manuel d'une part et les éléments d'accouplement (15,17) situés sur les soupapes (12,13,14) d'autre part, et est équipé des contacts électriques (32) pour les capteurs de température (19) et les servomoteurs (21,22,23) d'actionnement des soupapes et que le module de mesure, de commande et de régulation (35) comporte, en dehors du système électronique, des parties des dispositifs d'actionnement manuel.

3. Mélangeur à thermorégulation électronique selon la revendication 1 ou 2, caractérisé en ce que le module à moteurs (18) comporte, sur sa face tournée vers le module à soupapes (7), une paroi utilisée comme plaquette à circuits imprimés (31), qui comporte, en dehors des contacts électriques (32) pour les capteurs de température (19) et les servomoteurs (21,22,23) d'actionnement des soupapes, des contacts électriques (33) réalisés sous la forme de contacts à enfichage, pour le raccordement à la tension d'alimentation d'un transformateur, et un contact électrique (34) est agencé sous la forme d'une barrette de connexion pour l'application de la tension d'alimentation au système électronique du module de mesure, de commande et de régulation (35).

4. Mélangeur à thermorégulation électronique selon l'une des revendications 1 à 3, caractérisé en ce que le module de mesure, de commande et de régulation (35) pour la transmission de la tension d'alimentation du système électronique est pourvu d'un contact électrique (36) réalisé sous la forme d'une fiche mâle pour le raccordement au contact électrique (34) réalisé sous la forme d'une barrette de connexion, du module à moteurs (18).

5. Mélangeur à thermorégulation électronique selon l'une des revendications 2 à 4, caractérisé en ce que le module à soupapes (7) possède une autre sortie (10) pour l'eau de mélange et une soupape de commutation (14) équipée d'un élément d'accouplement (15,17) pour faire fonctionner au choix les sorties (10) pour l'eau de mélange, et que le module à moteurs (18) comporte un autre servomoteur (23) d'actionnement d'une soupape et une autre transmission comportant des éléments d'accouplement (24,24',27,29,30) pour la liaison avec les éléments d'accouplement (15,17) de la soupape (14).

6. Mélangeur à thermorégulation électronique selon la revendication 2 et éventuellement l'une des revendications précédentes 3 à 5, caractérisé en ce que les éléments d'accouplement (15,17) et les soupapes (12,13,14) sont réalisés sous la forme de brides d'accouplement, peuvent être enfichés sur des tiges de soupape (16) et possèdent une denture, dans laquelle s'engagent les éléments d'accouplement (24,24') du module à moteurs (18).

7. Mélangeur à thermorégulation électronique selon la revendication 5 et éventuellement la revendication 6, caractérisé en ce que les éléments d'accouplement (24,27,29,30) du module à moteurs (18) possèdent des croix d'accouplement partiellement élastiques, dont les doigts les plus longs s'engagent dans des évidements inférieurs frontaux de roues d'accouplement, tandis que les doigts plus courts élastiques et saillants s'engagent dans les éléments d'accouplement (15,17), réalisés sous la forme d'une bride à denture, du module à soupapes (7).

8. Mélangeur à thermorégulation électronique selon la revendication 7, caractérisé en ce que pour la liaison avec les servomoteurs (21,22,23) des soupapes pour l'eau froide, l'eau chaude ainsi que l'eau de mélange, les roues d'accouplement portent des pignons, qui sont raccordés rigidement aux roues d'accouplement et peuvent tourner avec ces dernières dans des coussinets de palier fixes, alors qu'ils engrènent par ailleurs avec les transmissions prévues pour les servomoteurs (12,13,14) d'actionnement des soupapes.

9. Mélangeur à thermorégulation électronique selon la revendication 8, caractérisé en ce que le module à moteurs (18) est équipé d'arbres (37) pouvant être actionnés manuellement et parmi lesquels au moins deux arbres (37) peuvent être raccordés directement aux pignons des roues d'accouplement prévues pour la soupape (13) pour l'eau froide et pour la soupape (12) pour l'eau chaude, moyennant un découplage des transmissions des servomoteurs (22,21) d'actionnement des soupapes.

10. Mélangeur à thermorégulation électronique selon la revendication 8, caractérisé en ce que la roue d'accouplement (27) pour la liaison avec le servomoteur (23) d'actionnement de la soupape (14) comporte, pour la commutation, une denture extérieure (38) destinée à engrener avec une courroie dentée, qui engrène avec l'un des arbres (37) actionnés manuellement.

11. Mélangeur à thermorégulation électronique selon l'une des revendications précédentes, caractérisé en ce que le module de mesure, de commande et de régulation (35) est équipé de dispositifs d'affichage (39) et d'un clavier pour différentes fonctions, comme par exemple le branchement et le débranchement, le fonctionnement d'une douche ou d'une baignoire, le réglage de la valeur de consigne de débit et de température, uniquement le fonctionnement à l'eau froide ou eau chaude, l'appel de l'heure ou pour éventuellement d'autres fonctions.

12. Mélangeur à thermorégulation électronique selon la revendication 11, caractérisé en ce que le clavier est agencé sous la forme d'un clavier à effleurement (40).

13. Mélangeur à thermorégulation électronique selon l'une des revendications précédentes, caractérisé en ce que le module de mesure, de commande et de régulation (35) comporte des volants (41), qui engrène avec les arbres (37) ou, en cas de défaillance du courant, peuvent être amenés à engrener avec ces derniers, de préférence sous l'action d'une pression.

14. Mélangeur à thermorégulation électronique selon l'une des revendications précédentes, caractérisé en ce que le module à soupapes (7), le module à moteurs (18) et le module de mesure, de commande et de régulation (35) sont disposés dans une ouverture d'un mur, que le module à soupapes (7) est entouré par un boîtier encastré (42) et est recouvert par l'installation de finition au moyen d'un boîtier à enduit (43), qui, pour l'installation finale, peut être remplacé par le module à moteurs (18).

15. Mélangeur à thermorégulation électronique selon l'une des revendications précédentes, caractérisé en ce que le module de mesure, de commande et de régulation (35), qui est raccordé au module à moteurs (18), ferme l'ouverture ménagée dans le mur d'une manière étanche à l'eau en direction de l'extérieur et s'applique à cet effet par un bord (44) contre le mur moyennant l'interposition d'une garniture d'étanchéité prévue dans un logement circonférentiel (45), le bord (44) étant en outre raccordé d'une manière étanche à l'eau au clavier à effleurement (40) et faisant partie d'un boîtier (46), qui renferme d'une manière étanche le système électronique du module de mesure, de commande et de régulation (35), et dont l'élément de paroi, qui forme le clavier à effleurement (40), traverse une ouverture (47) ménagée dans un revêtement (48) et est entouré par ce dernier sous la forme d'une rosette et comporte un volet inférieur (49) pour l'accès aux volants (41).

16. Mélangeur à thermorégulation électronique selon l'une des revendications précédentes, caractérisé en ce que le module à soupapes (7) et le module à moteurs (18) comportent des ouvertures (51) servant à recevoir des tiges de centrage (52) pour un ajustement centré entre le module à soupapes (7) et le module à moteurs (18), et que le module à soupapes (7) comporte au moins une ouverture taraudée (53) pour une liaison vissée (54,55) avec le module à moteurs (18).

17. Mélangeur à thermorégulation électronique selon la revendication 16, caractérisé en ce que le module à soupapes (7) comporte des ouvertures (56) pour une liaison vissée (57) et est équipé du boîtier encastré (42) et du boîtier à enduit (43).

18. Mélangeur à thermorégulation électronique selon l'une des revendications précédentes, caractérisé en ce que le module de mesure, de commande et de régulation (35) est raccordé au module à moteurs (18) par l'intermédiaire de vis (58), qui sont masquées en direction de l'extérieur par des capuchons de revêtement (59).

19. Mélangeur à thermorégulation électronique selon l'une des revendications précédentes, caractérisé en ce que les soupapes (12,13,14) sont maintenues dans un corps en forme de T (60) et que les servomoteurs (21,22,23) d'actionnement des soupapes sont décalés latéralement par rapport aux soupapes (12,13,14) de telle sorte qu'elles sont positionnées approximativement dans le plan des soupapes (12,13,14) une fois que le module à soupapes (7) et le module à moteurs (18) ont été réunis lors du montage.

20. Mélangeur à thermorégulation électronique selon l'une des revendications précédentes, caractérisé en ce que les contacts électriques (32) situés sur la plaquette à circuits imprimés (31) pour les capteurs de température (19) sont agencés de manière à être élastiques.

21. Mélangeur à thermorégulation électronique selon la revendication 5, caractérisé en ce que les éléments d'accouplement (24',27,29,30) du module à moteurs (18) possèdent des croix rigides d'accouplement, dont les doigts les plus longs s'engagent dans des logements frontaux inférieurs de roues d'accouplement, tandis que les doigts les plus courts font saillie et s'engagent dans la denture de la bride des éléments d'accouplement (15,17) du module à soupapes (7), d'une manière assistée par des ressorts (61), qui sont prévus entre les roues d'accouplement et une paroi (62) du module à moteurs (18).

22. Mélangeur à thermorégulation électronique selon l'une des revendications 7 et 21, caractérisé en ce que les croix d'accouplement sont maintenues d'une manière imperdable derrière des becs (63) des coussinets de palier.
